# EUROPÄISCHE PATENTANMELDUNG

(11) **EP 4 847 395 A1**
(43) Veröffentlichungstag der Anmeldung: **02.12.2026**
(21) Anmeldenummer: 26181380.2
(22) Anmeldetag: 27.05.2026
(51) Int. Cl.: B64G 1/64

(54) **VERSCHLUSSKLAPPE FÜR EINE SATELLITENAUSWURFEINHEIT UND AUSWURFEINHEIT FÜR SATELLITEN**

(30) Priorität: 28.05.2025 DE 202025102996 U
(71) Anmelder: EXOLAUNCH GmbH, 10785 Berlin (DE)
(72) Erfinder: STERNHARZ, Dimitry, 10785 Berlin (DE); SCHWARZ, Peter, 5023 Salzburg (AT); GRUBER, Johannes, 5023 Koppl (AT)
(74) Vertreter: Manitz Finsterwald Patent- und Rechtsanwaltspartnerschaft mbB

(57) **Zusammenfassung**

Die Offenbarung betrifft eine Verschlussklappe (10) für eine Satellitenauswurfeinheit (100), umfassend zumindest einen Anschlag (103) und einen axial beweglichen Bolzen (15). Der Bolzen (15) verhindert in einer Verriegelungsstellung ein Verschwenken der Verschlussklappe (10) durch Eingriff an dem Anschlag (103). Die Satellitenauswurfeinheit (100) kann einen Rahmen umfassen, der einen Innenraum zur Aufnahme mindestens eines Satelliten definiert und mit der Verschlussklappe (10) gekoppelt ist.

## Beschreibung

Die Offenbarung betrifft eine Verschlussklappe für eine Satellitenauswurfeinheit und eine solche Auswurfeinheit für Satelliten.

Derartige Verschlussklappen sind beispielsweise mit Verriegelungsmechanismen bestehend aus einem oder mehreren Bolzen und jeweils einem Verriegelungselement für jeden Bolzen versehen, welche die Verschlussklappe verriegeln und entriegeln können. Die Bolzen können zur axialen Bewegung in Gleitführungen gelagert sein. Allerdings wirken im verriegelten Zustand durch die von dem Satelliten auf die Verschlussklappe ausgeübte Kraft und durch die Kraft einer Öffnungsfeder hohe Querkräfte auf die Bolzen, die von den Gleitführungen aufgenommen werden, sodass hohe Stützkräfte und dadurch hohe Reibungskräfte zwischen den Gleitlagern und den Bolzen auftreten. Dies erschwert die axiale Bewegung der Bolzen und damit das Auslösen zum Öffnen der Verschlussklappe. Dadurch ist das Risiko einer Fehlauslösung, bei welcher der Verriegelungsmechanismus nicht entriegelt, erhöht.

Es ist die Aufgabe der vorliegenden Offenbarung, das Risiko von Fehlauslösungen, bei welchen der Verriegelungsmechanismus nicht entriegelt, zu verringern.

Diese Aufgabe wird durch den Gegenstand der unabhängigen Ansprüche gelöst. Vorteilhafte Weiterbildung sind Gegenstand der abhängigen Ansprüche und ergeben sich aus der Beschreibung sowie aus den Zeichnungen.

Die offenbarungsgemäße Verschlussklappe ist für eine Satellitenauswurfeinheit vorgesehen und umfasst zumindest einen Anschlag und einen axial beweglichen Bolzen, der in einer Verriegelungsstellung ein Verschwenken der Verschlussklappe durch Eingriff an dem Anschlag verhindert. Zwischen Anschlag und Bolzen ist ein Zwischenelement vorhanden, das bewirkt, dass in der Verriegelungsstellung bei einer Kraftbeaufschlagung der Verschlussklappe in einer Öffnungsrichtung der Bolzen im Wesentlichen, überwiegend oder nahezu ausschließlich in seiner axialen Richtung mit Kraft beaufschlagt wird.

Unter einer Satellitenauswurfeinheit wird generell eine Einheit verstanden, mit welcher Satelliten, nachdem sie etwa durch eine Rakete in einen Orbit transportiert wurden, von der Rakete abgeworfen werden. Die Auswurfeinheit kann einen Innenraum für Satelliten aufweisen, der durch einen Rahmen definiert wird. Mit der Verschlussklappe kann nach Transport in den Orbit der Innenraum geöffnet und der Satellit freigegeben werden.

In der Verriegelungsstellung ist der Bolzen im Eingriff an dem Anschlag, sodass die Verschlussklappe geschlossen bleibt. Entsprechend kann in einer Öffnungsstellung der Bolzen von dem Anschlag entkoppelt sein, sodass sich die Verschlussklappe öffnen lässt. Zu diesem Zweck kann der Anschlag beispielsweise an einem Rahmen der Auswurfeinheit vorgesehen sein. Insbesondere kann der Anschlag durch ein Gegenstück, aber auch durch eine Öffnung in dem Rahmen, in welche der Bolzen eingreift, gebildet sein.

Der Eingriff des Bolzens an dem Anschlag erfolgt insbesondere mittelbar über das Zwischenelement. Insbesondere ist es möglich, dass nur das Zwischenelement unmittelbar an dem Anschlag anliegt bzw. diesen berührt.

Da der Bolzen überwiegend bzw. im Wesentlichen in axialer Richtung mit Kraft beaufschlagt wird, erfährt dieser keine oder nahezu keine Querkräfte durch den Anschlag. Dadurch werden auch die auf den Bolzen wirkenden Stützkräfte und damit die Reibungskräfte auf ein Minimum oder sogar auf null reduziert. Dies wiederum verringert erheblich das Risiko von Fehlauslösungen, bei welchen der Verriegelungsmechanismus nicht entriegelt.

Der Bolzen kann in Längsrichtung, d.h. in seiner axialen Richtung, verschiebbar gelagert sein. Dies geschieht insbesondere durch die Verwendung von wenigstens einem Gleitlager für den Bolzen. Beispielsweise kann der Bolzen mittels zwei Gleitlagern gelagert sein.

Die Kraftwirkungslinie einer in der Verriegelungsstellung durch das Zwischenelement auf den Bolzen wirkenden Kraft kann im Wesentlichen parallel zur Längsachse, also insbesondere in Längsrichtung des Bolzens verlaufen, um die Querkräfte auf den Bolzen und somit die Reibungskräfte in den Gleitlagern zu minimieren oder eliminieren.

Das Zwischenelement kann schwenkbar gelagert sein. Insbesondere kann das Zwischenelement schwenkbar an der Verschlussklappe montiert sein. Eine Schwenkachse des Zwischenelements kann zu einer Längsachse des Bolzens versetzt sein und quer, insbesondere orthogonal, dazu verlaufen.

Wie oben erwähnt, kann der Anschlag ein Gegenstück oder auch Gegenlagerelement aufweisen, an welchem das Zwischenelement mit einer Anlagefläche direkt anliegen kann. Der Anschlag kann im Querschnitt zumindest teilweise kreisförmig sein. Beispielsweise kann der Anschlag ein Rollenlager sein. Die Anlagefläche des Zwischenelements kann dabei eine Kontur aufweisen, die einer Negativkontur zumindest eines Teils des Anschlags entspricht, wodurch ein Formschluss zwischen Anschlag und Zwischenelement entstehen kann. Insbesondere kann die Kontur der Anlagefläche konkav und insbesondere auch kreisförmig gewölbt sein.

Das Zwischenelement kann in der Verriegelungsstellung des Bolzens kraftschlüssig und/oder formschlüssig entgegen einer Bewegung in die Öffnungsrichtung der Verschlussklappe an dem Anschlag abgestützt sein. Zusätzlich oder alternativ dazu kann das Zwischenelement formschlüssig an dem Anschlag abgestützt sein.

Das Zwischenelement kann in der Verriegelungsstellung mit seiner Kontur eine Gegenkontur des Anschlags zu einer der Öffnungsrichtung der Verschlussklappe entgegengesetzten Seite hintergreifen. Somit kann das Zwischenelement einen Haken bilden, der an dem Anschlag in der Verriegelungsstellung festgelegt ist.

Der Anschlag kann dabei eine ebene Anlagefläche bilden, die der Öffnungsrichtung der Verschlussklappe entgegengerichtet ist, d.h. insbesondere der Längsachse des Bolzens zugewandt ist, und an der in der Verriegelungsstellung das Zwischenelement mit seiner Kontur flächig aufliegt.

Ferner kann in der Verriegelungsstellung das Zwischenelement entlang seiner Erstreckung von seiner Schwenkachse bis zu seiner an dem Anschlag anliegenden Anlagefläche über einen Spalt zu dem Anschlag, insbesondere in einer Richtung quer zu der Öffnungsrichtung, beabstandet ist.

Es kann ein Zugelement vorgesehen sein, mit welchem eine Zugkraft zwischen dem Bolzen und dem Zwischenelement übertragen werden kann. Das Zugelement kann insbesondere ein Draht, ein Bügel oder ein Seil sein. Das Zugelement dient dazu, bei einer Öffnungs- oder Entriegelungsbewegung des Bolzens das Zwischenelement mitzuziehen, sodass dieses schnell und verlässlich von dem Gegenstück entkoppelt, um ein ungewolltes Blockieren der Verschlussklappe beim Öffnen zu vermeiden.

Vorgesehen sein kann ein Hebel, insbesondere ein Kniehebel, zum Halten des Bolzens in einer der Verriegelungsstellung entsprechenden Schließposition und zum Bewegen des Bolzens aus der Schließposition in eine Öffnungsposition. Der Hebel kann Teil eines Schiebers sein. Jeder Bolzen kann insbesondere einen Bolzenkopf aufweisen, welcher gelenkig mit einem Schenkel verbunden ist. Der Schenkel wiederum ist ebenfalls gelenkig mit einem Hebel des Schiebers verbunden. Durch diesen Mechanismus kann eine Längsbewegung des Schiebers je nach Richtung in eine Bewegung des Bolzens in die Schließposition oder die Öffnungsposition umgesetzt werden. Zudem kann der Hebel den Bolzen in der Schließposition arretieren, um die Verriegelung der Verschlussklappe zu bewirken.

Es kann eine Feder vorgesehen sein, die den Bolzen in seine Öffnungsstellung vorspannt. Die Feder kann insbesondere eine (Spiral-)Druckfeder sein, durch welche der Bolzen durchgeführt ist. Beispielsweise kann sich die Feder einerseits an einem der Gleitlager und andererseits an einem Absatz des Bolzens abstützen.

Eine offenbarungsgemäße Auswurfeinheit gemäß einem weiteren Aspekt umfasst den bereits oben beschriebenen Rahmen, der einen Innenraum zur Aufnahme des Satelliten definiert, und die zuvor beschriebene Verschlussklappe zum Verschließen des Innenraums. Der Anschlag kann insbesondere relativ zu dem Rahmen festgelegt sein. Die Verschlussklappe kann zudem um die Schwenkachse verschwenkbar am Rahmen angebracht sein. Insbesondere kann die Schwenkachse beabstandet zu dem Bolzen und dem Anschlag angeordnet sein.

Im Folgenden wird die Offenbarung rein beispielhaft mit Bezug auf ein in den Zeichnungen schematisch gezeigtes Ausführungsbeispiel erläutert. Dabei zeigt
- Fig. 1: eine perspektivische Ansicht einer Auswurfeinheit für einen Satelliten,
- Fig. 2: eine Verschlussklappe der Auswurfeinheit nach einem ersten Ausführungsbeispiel in einer Schließposition in Draufsicht,
- Fig. 3: einen Verriegelungsmechanismus der Verschlussklappe aus Fig. 2, wobei sich der Bolzen in einer der Schließposition entsprechenden Verriegelungsstellung befindet,
- Fig. 4: den Verriegelungsmechanismus aus Fig. 3, wobei sich der Bolzen in einer Öffnungsstellung befindet,

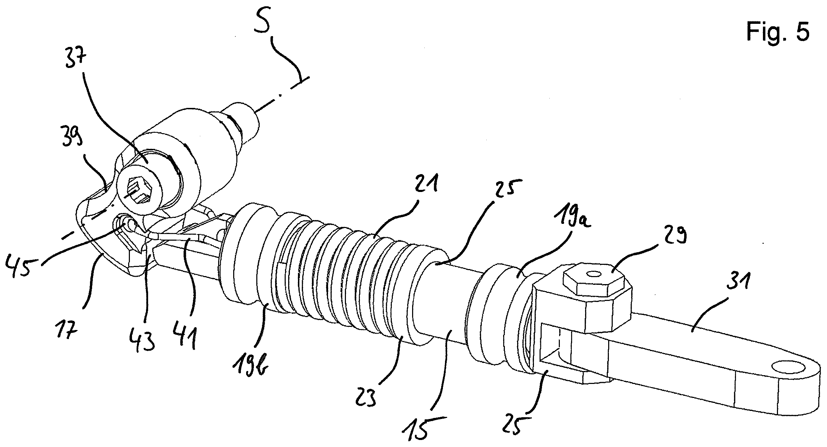

- Fig. 5: den Bolzen und das Zwischenelement gemäß Fig. 3 und 4 in perspektivischer und isolierter Ansicht,
- Fig. 6: einen Verriegelungsmechanismus einer Verschlussklappe nach einem zweiten Ausführungsbeispiel, in dem der Anschlag und das Zwischenelement im Vergleich zu dem ersten Ausführungsbeispiel auf andere Weise ausgeformt sind, wobei sich der Bolzen in einer der Schließposition entsprechenden Verriegelungsstellung befindet, und
- Fig. 7: den Verriegelungsmechanismus aus Fig. 6, wobei sich der Bolzen in einer Öffnungsstellung befindet.

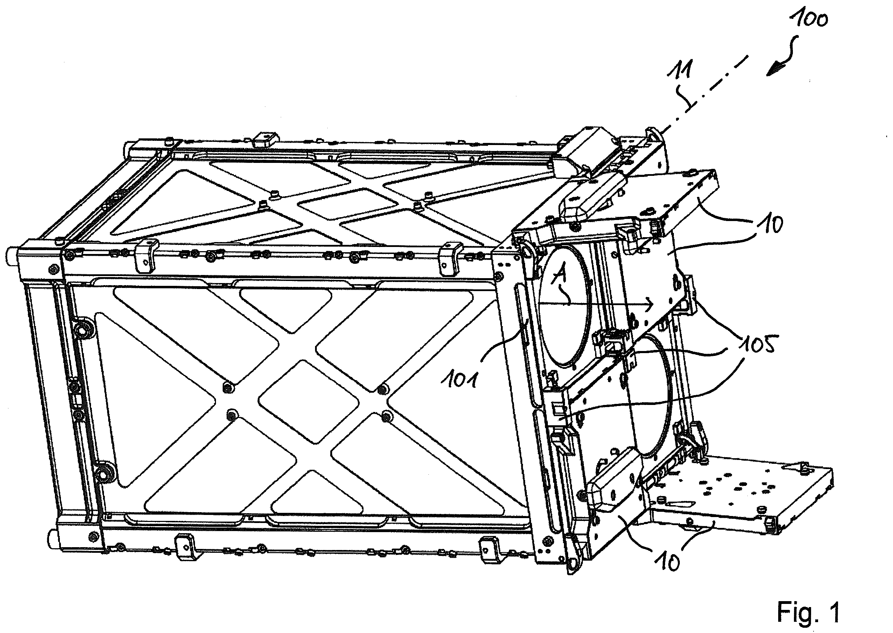

Die in Fig. 1 gezeigte Auswurfeinheit 100 umfasst einen Rahmen 101, welcher einen Innenraum zur Aufnahme mehrerer nicht dargestellter Satelliten definiert. Der Innenraum umfasst vier Satellitenschächte, welche jeweils durch eine Verschlussklappe 10 verschließbar sind. Jede Verschlussklappe 10 sichert, wenn sie geschlossen ist, einen durch eine Feder belasteten Satelliten gegenüber einer Bewegung in einer Auswurfrichtung A.

Jede Verschlussklappe 10 ist einseitig um eine Schwenkachse 11 schwenkbar gelagert und durch eine Torsionsfeder 13 in eine Öffnungsrichtung O vorgespannt. Die Öffnungsrichtung O entspricht hier der Auswurfrichtung A. Jede Verschlussklappe 10 befindet sich während des Transports der Satelliten in ihrer geschlossenen Stellung und wird am Auswurfort entriegelt, woraufhin die Verschlussklappe 10 infolge der Vorspannung durch die Torsionsfeder 13 in ihre Offenstellung versetzt wird, sodass der jeweilige Satellit ausgeworfen werden kann.

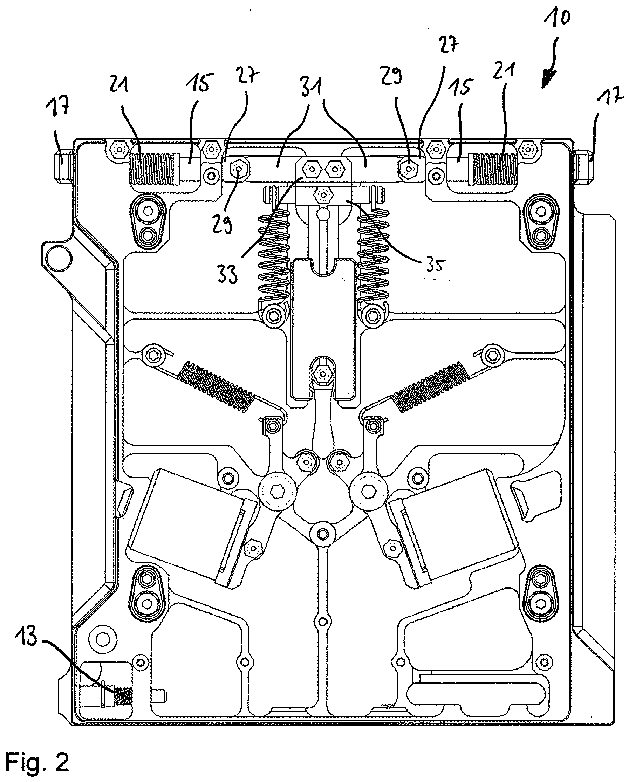

In Fig. 2 ist eine offenbarungsgemäße Verschlussklappe 10 nach einem ersten Ausführungsbeispiel gezeigt, wobei eine Abdeckung ausgeblendet ist, welche in Fig. 1 sichtbar ist. Fig. 2 zeigt einen Freigabemechanismus der Verschlussklappe 10, welcher sich gerade in der Schließposition befindet, also bei verriegelter Verschlussklappe 10.

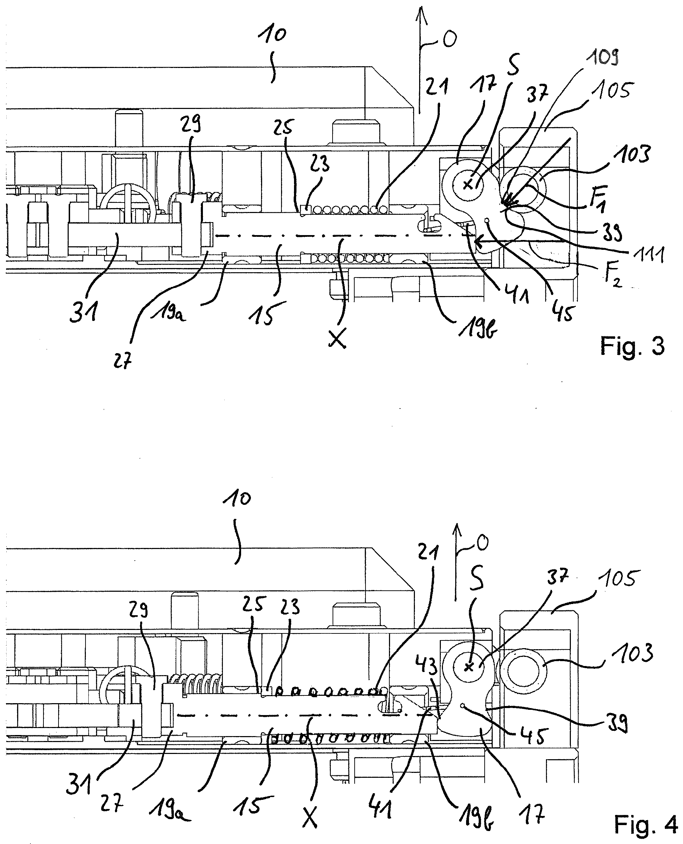

Die Verschlussklappe 10 umfasst zwei Bolzen 15 und zwei Zwischenelemente 17. Die Zwischenelemente 17 ragen in der in Fig. 2 gezeigten Schließposition, die einer Verriegelungsstellung der Bolzen 15 entspricht, zum Verriegeln der Verschlussklappe 10 aus dieser in entgegengesetzten Richtungen heraus. Wie in Fig. 3 gezeigt, stehen die Bolzen 15 in der Verriegelungsstellung über ein jeweiliges Zwischenelement 17 mit einem Anschlag 103 in Eingriff, der beispielsweise ein Rollenlager aufweist. Die Anschläge 103 sind an Verriegelungseinheiten 105 vorgesehen, die wiederum fest am Rahmen 101 montiert sind (vgl. Fig. 1).

Die Zwischenelemente 17 sind über einen Zapfen 37 schwenkbar an der Verschlussklappe 10 gelagert, wobei die Schwenkachse S eines Zwischenelementes 17 zu einer Längsachse X des zugehörigen Bolzens 15 versetzt ist und orthogonal dazu verläuft. Die Zwischenelemente 17 umfassen jeweils eine Anlagefläche 39, die in der Verriegelungsstellung des Bolzens 15 an dem Anschlag 103 anliegt, wie in Fig. 3 gezeigt. Dazu ist die Kontur des Zwischenelements 17 an dem Anlageabschnitt 39 konkav gewölbt und entspricht einer Negativkontur des Anschlags 103, d.h. ist komplementär zu einer Gegenkontur 111 des Anschlags 103 ausgebildet. Die Anlagefläche 39 des Zwischenelements 17 weist hier eine Mulde auf, die komplementär zu der konvexen Gegenkontur 111 des Anschlags 103 ist. In der Verriegelungsstellung ist das Zwischenelement 17 derart mit seiner Anlagefläche 39 an dem Anschlag 103 angelegt, dass das Zwischenelement 17 zumindest teilweise auch an einer der Öffnungsrichtung O der Verschlussklappe 10 entgegengesetzten Seite des Anschlags 103 kraft- und formschlüssig abgestützt ist. Auch quer zu der Öffnungsrichtung O liegt die Anlagefläche 39 an dem Anschlag 103 an. Ein weiterer, der Anlagefläche 39 gegenüberliegender Anlageabschnitt 43 des Zwischenelements 17 (Fig. 4) wird zumindest in der Verriegelungsstellung von dem Bolzen 15 kontaktiert.

In Fig. 4, die den Bolzen 15 in Öffnungsstellung zeigt, kontaktiert das Zwischenelement 17 den Anschlag 103 nicht und ragt nicht aus der Verschlussklappe 10 heraus. Dadurch ist die Verschlussklappe 10 entriegelt und kann öffnen. Damit im Falle einer gewünschten Öffnung die Entriegelung schnell und zuverlässig erfolgt, wird das Zwischenelement 17 über ein am Bolzen 15 befestigtes Zugelement 41, das durch eine Befestigungsöffnung 45 des Zwischenelements 17 geführt ist, durch den Bolzen 15 mitgenommen.

Wie Fig. 3 und 4 zeigen, sind die Bolzen 15 jeweils durch zwei Gleitlager 19a, 19b axial beweglich in der Verschlussklappe 10 gelagert. Jeder Bolzen 15 ist durch eine Druckfeder 21 in eine der Öffnungsstellung entsprechenden Freigabestellung vorgespannt, nämlich in Richtung eines Inneren der Verschlussklappe 10 und somit weg von dem Anschlag 103. Die Druckfeder 21 stützt sich einerseits über eine Scheibe 23 an einem Absatz 25 des Bolzens 15 und andererseits an dem Gleitlager 19b ab.

Jeder Bolzen 15 weist einen Bolzenkopf 27 auf, welcher einem zur direkten Anlage an dem Zwischenelement 17 bestimmten sperrenden Bolzenende gegenüberliegt und über einen Gelenkzapfen 29 ein Drehgelenk mit einem Schenkel 31 bildet. Der Schenkel 31 ist mit einem Knieelement 33 eines Schiebers 35 drehbar verbunden (Fig. 2). Der Schenkel 31 und das Knieelement 33 bilden einen Kniehebel für den jeweiligen Bolzen 15.

Der Schieber 35 ist in grundsätzlich bekannter Weise in einer Richtung senkrecht zu den Bolzen 15, in Fig. 2 vertikal, verschiebbar gelagert, sodass eine Bewegung des Schiebers 35 zu einer entsprechenden Bewegung der Bolzen 15 in die Verriegelungsstellung oder in eine Öffnungsstellung führt. Befindet sich der Schieber 35 in der in Fig. 2 gezeigten Position, werden die Bolzen 15 über die Schenkel 31 entgegen der Kraft der Druckfedern 21 in der Verriegelungsstellung gehalten. Wird der Schieber 35 aufgrund einer Auslösung in Fig. 2 vertikal nach unten bewegt, öffnet der Mechanismus, indem die Druckfedern 21 die Bolzen 15 in ihre Öffnungsstellung bewegen, die wiederum über die Zugelemente 41 die Zwischenelemente 17 mitnehmen.

In der geschlossenen Position der Verschlussklappe 10, die der in Fig. 3 gezeigten Verriegelungsstellung des Bolzens 15 entspricht, wirken infolge der Vorspannung durch die Torsionsfeder 13 und durch den federbelasteten Satelliten vergleichsweise hohe Kräfte zwischen dem als Gegenstück gebildeten Anschlag 103 und dem Zwischenelement 17. Fig. 3 zeigt, dass die von dem Anschlag 103 auf das Zwischenelement 17 wirkende Kraft F₁ eine deutliche Querkomponente zum Bolzen 15 aufweist. Das Zwischenelement 17 bewirkt jedoch, dass die von dem Zwischenelement 17 auf den Bolzen 15 wirkende Kraft F₂ zumindest im Wesentlichen und insbesondere nahezu ausschließlich oder nur in Richtung der Achse X des Bolzens 15 gerichtet ist, also keine oder nahezu keine Querkomponente zum Bolzen 15 aufweist. Dies bewirkt, dass keine auf den Bolzen 15 wirkenden Stützkräfte und damit hohe Reibungskräfte in den Gleitlagern 19a, 19b entstehen, oder dass diese zumindest auf ein Minimum reduziert werden. Dies wiederum verringert erheblich das Risiko von Fehlauslösungen, bei welchen der oben beschriebene Verriegelungsmechanismus nicht entriegelt.

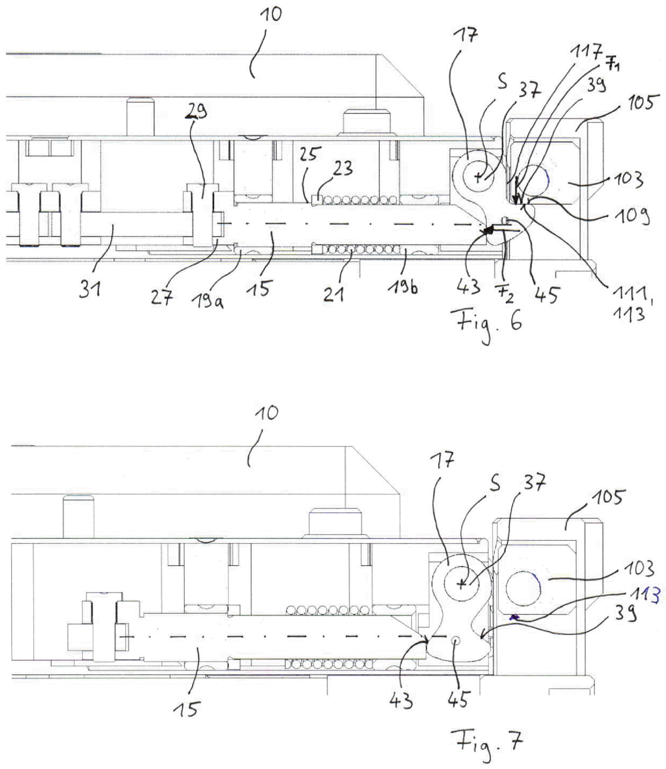

In Fig. 6 und 7 ist die Verschlussklappe 10 gemäß einem alternativen zweiten Ausführungsbeispiel dargestellt. Dieses zweite Ausführungsbeispiel entspricht weitestgehend dem ersten Ausführungsbeispiel, sodass nachfolgenden lediglich die wesentlichen Unterschiede gegenüber dem ersten Ausführungsbeispiel beschrieben sind.

Insbesondere ist zu erkennen, dass die Form des Anschlags 103 und des Zwischenelementes 17 von dem ersten Ausführungsbeispiel abweichen.

Das Zwischenelement 17 bildet bei dieser Ausführungsform eine Hakenform aus, die dazu dient den Anschlag 103 in der Verriegelungsstellung des Bolzens 15 zu hintergreifen. Das Zwischenelement 17 ist somit von einer Seite des Anschlags 103 an diesem abgestützt, die entgegengesetzt zu der Öffnungsrichtung O der Verschlussklappe 10 ist.

Demzufolge ist das Zwischenelement 17 in der Verriegelungsstellung formschlüssig gegenüber einer Bewegung in die Öffnungsrichtung O gesichert.

Der Anschlag 103 weist zudem einen im Wesentlichen rechteckförmigen Querschnitt auf. Der Anschlag 103 bildet eine ebene Anlagefläche 113, die quer insbesondere senkrecht, zu der Öffnungsrichtung O und somit insbesondere parallel zu der Längsachse X des Bolzens 15 verläuft. In der Verriegelungsstellung nach Fig. 6 liegt das Zwischenelement 17 ausschließlich an der Anlagefläche 113 an dem Anschlag 103 an. Entlang seiner Erstreckung von seiner Schwenkachse S radial nach außen bis zu seiner an der Anlagefläche 113 anliegenden Anlagefläche 39 ist das Zwischenelement 17 durchgängig über einen Spalt 117 zu dem Anschlag 103 beabstandet.

In Fig. 6 ist zu erkennen, dass die Kräfte F₁ und F₂ nun in senkrecht zueinanderstehenden Raumrichtungen wirken.

### Bezugszeichenliste

- 10: Verschlussklappe
- 11: Schwenkachse
- 13: Torsionsfeder
- 15: Bolzen
- 17: Zwischenelement
- 19a: Gleitlager
- 19b: Gleitlager
- 21: Druckfeder
- 23: Scheibe
- 25: Absatz
- 27: Bolzenkopf
- 29: Gelenkzapfen
- 31: Schenkel
- 33: Knieelement
- 35: Schieber
- 37: Zapfen
- 39: Anlagefläche
- 41: Zugelement
- 43: Anlageabschnitt
- 45: Befestigungsöffnung
- 100: Auswurfeinheit
- 101: Rahmen
- 103: Anschlag
- 105: Verriegelungseinheit
- 109: Kontur
- 111: Gegenkontur
- 113: Anlagefläche
- 117: Spalt
- A: Auswurfrichtung
- F₁: Kraft
- F₂: Kraft
- O: Öffnungsrichtung
- S: Schwenkachse des Zwischenelementes
- X: Längsachse des Bolzens

## Patentansprüche

1. Verschlussklappe (10) für eine Satellitenauswurfeinheit (100), umfassend zumindest einen Anschlag (103) und einen entlang seiner Längsachse axial beweglichen Bolzen (15), der in einer Verriegelungsstellung ein Verschwenken der Verschlussklappe (10) durch Eingriff an dem Anschlag (103) verhindert,
**dadurch gekennzeichnet, dass**
zwischen Anschlag (103) und Bolzen (15) ein Zwischenelement (17) vorhanden ist, das bewirkt, dass in der Verriegelungsstellung bei einer Kraftbeaufschlagung der Verschlussklappe (10) in einer Öffnungsrichtung (O) der Bolzen (15) im Wesentlichen in seiner Längsachse mit Kraft beaufschlagt wird.

2. Verschlussklappe (10) für eine Satellitenauswurfeinheit (100), umfassend zumindest einen Anschlag (103) und einen axial beweglichen Bolzen (15), der in einer Verriegelungsstellung ein Verschwenken der Verschlussklappe (10) durch Eingriff an dem Anschlag (103) verhindert,
**dadurch gekennzeichnet, dass**
zwischen Anschlag (103) und Bolzen (15) als Zwischenelement ein Schwenkhebel (17) vorhanden ist.

3. Verschlussklappe (10) nach Anspruch 1 oder 2,
**dadurch gekennzeichnet, dass** der Bolzen (15) entlang seiner Längsachse verschiebbar gelagert ist.

4. Verschlussklappe (10) nach einem der vorstehenden Ansprüche,
**gekennzeichnet durch** wenigstens ein Gleitlager (19a, 19b) für den Bolzen (15).

5. Verschlussklappe (10) nach einem der vorstehenden Ansprüche,
**dadurch gekennzeichnet, dass** eine Schwenkachse (S) des Zwischenelements (17) zu einer Längsachse (X) des Bolzens (15) versetzt ist und quer, insbesondere orthogonal, dazu verläuft.

6. Verschlussklappe (10) nach einem der vorstehenden Ansprüche,
**dadurch gekennzeichnet, dass** eine Anlagefläche (39) des Zwischenelements (17) eine Kontur (109) aufweist, die einer Negativkontur zumindest eines Teils des Anschlags (103) entspricht.

7. Verschlussklappe (10) nach einem der vorstehenden Ansprüche ,
**dadurch gekennzeichnet, dass** der Anschlag (103) eine Anlagefläche (39, 111) aufweist, die parallel zu der Längsachse orientiert ist, wobei insbesondere ein Lot auf diese Ebene unter 90° zu der Längsachse verläuft.

8. Verschlussklappe (10) nach Anspruch 6 oder 7,
**dadurch gekennzeichnet, dass** das Zwischenelement (17) in der Verriegelungsstellung mit seiner Kontur (109) eine insbesondere ebene Gegenkontur (111) des Anschlags (103) hintergreift.

9. Verschlussklappe (10) nach einem der Ansprüche 6 bis 8,
**dadurch gekennzeichnet, dass** in der Verriegelungsstellung das Zwischenelement (17) flächig an dem Anschlag (103) anfliegt.

10. Verschlussklappe (10) nach einem der Ansprüche 6 bis 9,
**dadurch gekennzeichnet, dass** in der Verriegelungsstellung das Zwischenelement (17) außerhalb der Anlagefläche (39) von dem Anschlag (103) beabstandet ist.

11. Verschlussklappe (10) nach einem der vorstehenden Ansprüche,
**dadurch gekennzeichnet, dass** das Zwischenelement (17) schwenkbar an der Verschlussklappe (10) montiert ist.

12. Verschlussklappe (10) nach einem der vorstehenden Ansprüche,
**gekennzeichnet durch** ein Zugelement (41), insbesondere einen Draht, zum Übertragen einer Zugkraft zwischen dem Bolzen (15) und dem Zwischenelement (17).

13. Verschlussklappe (10) nach einem der vorstehenden Ansprüche,
**gekennzeichnet durch** einen Hebel, insbesondere einen Kniehebel (31, 33), zum Halten des Bolzens (15) in einer der Verriegelungsstellung entsprechenden Schließposition und zum Bewegen des Bolzens (15) aus der Schließposition in eine Öffnungsposition.

14. Verschlussklappe (10) nach einem der vorstehenden Ansprüche,
**gekennzeichnet durch** eine Feder (21), die den Bolzen (15) in seine Öffnungsstellung vorspannt.

15. Auswurfeinheit (100) für Satelliten, umfassend
einen Rahmen (101), der einen Innenraum zur Aufnahme mindestens eines Satelliten definiert, und
zumindest eine Verschlussklappe (10) nach einem der vorstehenden Ansprüche zum Verschließen des Innenraums.
